# DEMANDE DE BREVET EUROPEEN

(11) **EP 1 666 000 A1**
(43) Date de publication de la demande: **07.06.2006**
(21) Numéro de dépôt: 05292188.9
(22) Date de dépôt: 18.10.2005
(51) Int. Cl.: A61C 5/06, A61C 9/00, B05C 17/005, B65D 83/00, B65D 35/30

(54) **Seringue en materiau souple pour l'injection de produit à durcissement rapide**

(30) Priorité: 03.12.2004 FR 0412909
(71) Demandeur: Perelmutter, Danielle, 94120 Fontenay-Sous-Bois (FR)
(72) Inventeur: Perelmutter, Danielle, 94120 Fontenay-Sous-Bois (FR)
(74) Mandataire: Schwartz, Thierry J.

(57) **Abrégé**

Afin de pouvoir réutiliser les seringues d'injection de produit de consistance mastique à durcissement rapide, la seringue selon l'invention est en matériau souple pour injecter un tel produit. Cette seringue (20) comporte un embout (22), un corps (21) et un piston (23), l'embout et le corps de la seringue étant entièrement réalisés en matériau souple, par exemple à base de silicone souple. Pour favoriser le démoulage du résidu de matériau durci dans la seringue (20) après injection, le corps de seringue (21) est avantageusement contraint par une gaine (30) en matériau rigide.

## Description

La présente invention concerne une seringue en matériau souple pour injecter un matériau de consistance mastique qui durcit dans les minutes suivant l'injection.

Cette seringue peut s'utiliser dans différentes applications faisant intervenir un matériau durcissable à froid, tel qu'un joint ou une colle, dans de nombreux domaines : bricolage, bâtiment, arts plastiques, décoration, mais plus particulièrement dans l'art dentaire.

Dans ce domaine, la réfection prothétique de dents endommagées est effectuée par :
- l'éviction des tissus cariés et taille de la dent ;
- l'élaboration d'une couronne provisoire en résine ;
- la prise d'une empreinte qui est transmise au prothésiste ;
- le coulage de l'empreinte au laboratoire et la réalisation d'une couronne définitive à partir du moulage obtenu.

Lors des étapes d'élaboration de la couronne provisoire, il est connu d'injecter la résine avec une seringue. Cette technique facilite la bonne répartition de la résine.

Dans le cas de dents ayant conservé une partie de couronne saine (dents non délabrée), la couronne provisoire est creuse : elle est réalisée par dépôt de résine sur la couronne une fois taillée. La résine est injectée (ou déposée) d'une part dans un moule préformé et d'autre part sur la partie coronaire préparée en bouche.

En variante, il est également possible d'effectuer un automoulage en prenant l'empreinte de la couronne avant de la tailler et le porte-empreinte est chargé de résine. Après la taille, de la résine est déposée par spatule ou injectée au niveau de la préparation et l'empreinte est repositionnée en bouche.

Dans le cas de dents délabrées (c'est-à-dire sans partie coronaire) la couronne provisoire est réalisée comme précédemment mais avec un ancrage intra radiculaire formé par un tenon.

La dent sera alors reconstituée par la réalisation d'un faux moignon ou « inlay core » en terminologie anglaise. Cet inlay core peut être obtenu de deux façons :
- soit par méthode directe opérée par le praticien à l'aide d'une injection de résine dans un moule de dépouille et sur la tête d'un tenon d'ancrage (et éventuellement dans le canal radiculaire) ; cet inlay core est ensuite retaillé et envoyé au prothésiste qui le dupliquera en alliage métallique à sceller en bouche : on se retrouve alors dans la situation correspondant à une dent non délabrée ;
- soit par prise d'empreinte transmise par le praticien au laboratoire qui réalise un inlay core métallique en mettant en oeuvre des étapes de même type que celles de la méthode directe mais « in vitro » : cette technique est globalement plus onéreuse.

Dans tous les cas, que ce soit pour réaliser une couronne provisoire ou un inlay core, de la résine est injectée lors de plusieurs étapes. Cette résine est préparée par mélange à froid d'une poudre de polymère (en général du polyméthacrylate de méthyle) et d'un solvant liquide. On obtient une pâte de consistance mastique.

La pâte obtenue est déposée avec une spatule de bouche ou injectée sur la préparation coronaire, dans le moule préformé, dans un moule de dépouille et sur la tête du tenon d'ancrage (technique d'inlay core en méthode directe), ou dans l'empreinte prise avant la préparation de la dent définitive.

Le problème général dans l'élaboration d'une couronne provisoire en résine provient de ce que cette technique ne fournit pas suffisamment de détails de structure du fait de son mode d'application. La couronne provisoire ne présentera pas alors suffisamment de rétention et risque de se desceller entre les séances.

Pour les préparations qui sont sous gingivales, une légère éviction gingivale est effectuée. Lorsque la couronne provisoire se descelle, la gencive peut reprendre sa place initiale en se plaçant entre la préparation et la couronne provisoire. La couronne provisoire ne remplira alors plus son rôle esthétique pour les dents antérieures lorsqu'elle se descellera, ni thérapeutique car la gencive ne sera pas maintenue au-delà de la préparation prothétique.

Pour palier ces inconvénients, il convient de rebaser la couronne provisoire. Pour cela il faudra, la première opération de dépôt et de durcissement de résine effectuée, réinjecter de la résine dans l'intrados (face intérieure) de la couronne provisoire non rétentive, replacer la couronne provisoire sur la préparation prothétique et attendre encore quelques minutes que la résine durcisse.

L'inconvénient majeur posé par cette technique est la perte de temps occasionné par cette deuxième phase appelée « rebasage ».

Pour palier cet inconvénient, il est connu d'utiliser un pistolet distributeur à crémaillère, armé d'une double cartouche contenant d'une part une base et d'autre part un catalyseur et au bout de laquelle on vient fixer un embout mélangeur. Dans cet embout, base et catalyseur se mélangent quand on actionne ce pistolet. Ce dernier est commercialisé par la société « 3M Espe » sous le nom de « Protemp3Garant » et par la société « Bosworth » sous le nom de « Ultra Trim ».

Cet embout mélangeur est assez fin pour que le produit puisse être déposé au niveau de la préparation coronaire prothétique et qu'un maximum de détails de celle-ci puisse être obtenu avec un minimum de bulles d'air. Une rétention suffisante de la prothèse est ainsi réalisée en un seul geste sans rebasage secondaire.

Ces pistolets permettent d'injecter un matériau composite ou une résine acrylique et placent le produit directement en bouche en enregistrant tous les détails de la préparation coronaire.

Le problème avec ces pistolets réside dans le fait que les embouts mélangeurs sont jetables et non réutilisables, si bien qu'ils présentent un coût économique élevé.

II serait alternativement possible d'injecter de la résine grâce à des seringues à empreinte en matériau plastique mais, là aussi, le problème majeur reste que ces seringues ne sont pas réutilisables.

L'invention vise à résoudre ce problème tout en permettant une rétention suffisante de la prothèse provisoire et réaliser une bonne adaptation de la dent provisoire sur la préparation coronaire.

A cette fin, il est proposé, quel que soit le travail à fournir, - couronne provisoire ou inlay core par méthode directe -, et quelle que soit la méthode utilisée pour réaliser la couronne provisoire, - moulage ou automoulage -, d'injecter le produit à l'aide d'une seringue en matériau souple démoulable et dont le produit injecté fuse dans les moindres détails de la préparation coronaire ou radiculaire.

Plus précisément, l'invention a pour objet une seringue pour injecter un produit de consistance mastique à durcissement rapide, cette seringue comportant un embout, un corps et un piston, l'embout et le corps de la seringue étant entièrement réalisés en matériau souple à base d'au moins un élastomère, de souplesse adaptée pour permettre le démoulage du résidu de matériau durci dans la seringue après injection.

L'élastomère est avantageusement un matériau autoclavable choisi parmi un caoutchouc naturel ou synthétique, par exemple un EPDM (terpolymère d'éthylène, de propylène et d'un diène) ou un HNBR (caoutchouc d'hydrogéno - nitrile - butadiène), une silicone, et un mélange d'au moins deux de ces élastomères.

Dans ces conditions, le matériau injecté permet un ajustage exact et précis de la couronne provisoire ou la réalisation précise d'un inlay core en résine par la méthode directe. Cette méthode reste moins onéreuse que la méthode classique avec prise d'empreinte.

En outre, le démoulage du résidu de matériau assure la réutilisation de la seringue après passage à l'autoclave, afin de répondre aux règles d'hygiène (température d'au moins 120-150 °C).

Selon des modes de réalisation particuliers :
- le matériau souple utilisé est autoclavable ;
- le piston présente une face de poussée contre le produit, cette face et son rebord périphérique sont recouverts d'une calotte amovible en matériau souple constitutif du corps et de l'embout ;
- le corps est cylindrique et enserré dans une gaine en matériau rigide, plastique, verre ou métal, d'où émerge l'embout de la seringue ;
- la gaine est articulée et munie de moyens de fermeture amovibles pour maintenir le corps de seringue contre la face interne de la gaine pendant l'opération d'injection de produit et libérer le corps après durcissement afin de démouler le produit durci ;
- le diamètre de la gaine est légèrement inférieur, par exemple d'environ 2 à 5%, au diamètre du corps de seringue pour faciliter le démoulage de la résine durcie par augmentation du diamètre du corps de la seringue hors de la gaine ;
- le produit à injecter est une résine de préparation prothétique coronaire à base de polyméthacrylate de méthyle, qui présente à la polymérisation un coefficient de retrait volumétrique de 5,1 % ;
- le matériau à base de silicone est constitué d'un polymère de siloxane avantageusement mélangé à un polymère poreux choisi parmi du tétrafluoroethylène (PTFE), du polyuréthane, un élastomère, et un mélange de deux de ces polymères, éventuellement drapé de fibres de renfort. La composition est ajustée en fonction de la souplesse visée selon l'application et le domaine technique.

La seringue est fabriquée par extrusion ou extrusion - soufflage du matériau à base de silicone. Ce procédé met en jeu les catalyseurs et additifs connus, ainsi que les températures et pression adaptées par l'Homme de l'art pour réaliser l'opération d'extrusion visée.

L'invention sera plus explicite au regard de la description détaillée qui suit, en référence aux figures annexées représentant :
- les figures 1a et 1b, une vue en coupe d'un schéma d'une dent isolée non délabrée et préparée en vue de réaliser une couronne provisoire;
- les figures 2a et 2b, une vue en coupe d'un schéma de dent isolée délabrée et préparée en vue de réaliser une couronne provisoire puis d'un inlay core par méthode directe ; et
- la figure 3, une vue longitudinale d'un exemple de seringue selon l'invention.

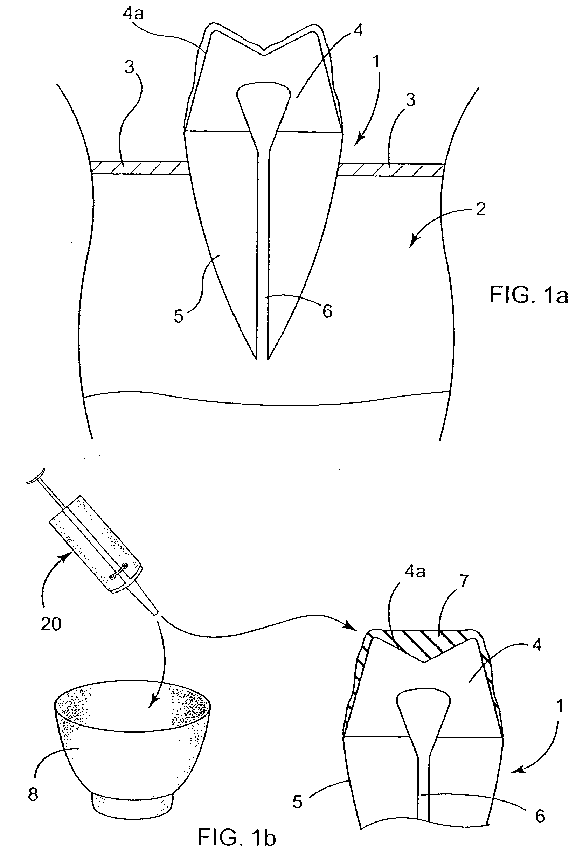

En référence à la figure 1 a, une dent 1 de patient non délabrée et insérée normalement dans le maxillaire 2 recouvert par la gencive 3, comporte une partie saine de couronne 4 et une racine 5, creusée par un canal longitudinal 6. Le travail en bouche consiste à tailler la couronne pour former une partie coronaire de contour 4a.

En référence à la figure 1b, de la résine 7 à durcissement rapide est ensuite injectée sur la partie coronaire 4a et également dans un moule 8 préformé qui est ensuite appliqué sur cette partie coronaire. La couronne provisoire ainsi réalisée est creuse. Les injections sont réalisées à l'aide d'une seringue 20 selon l'invention qui sera présentée en détails ci-dessous.

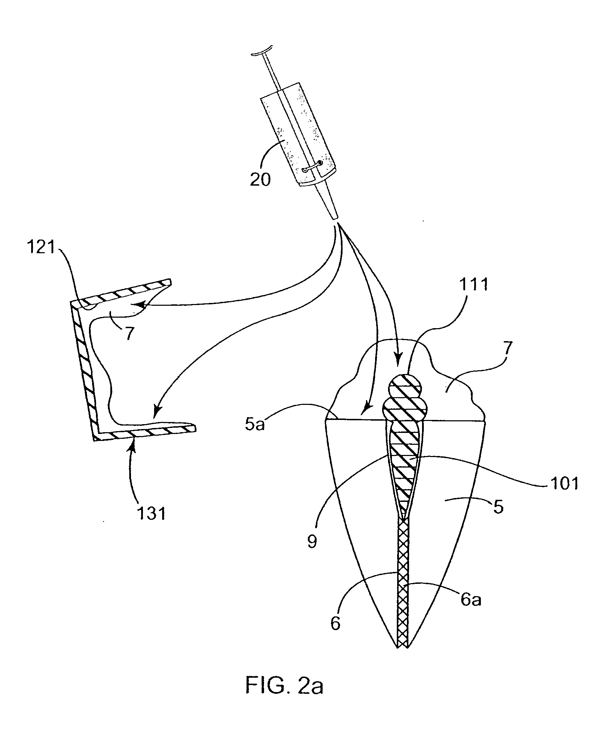

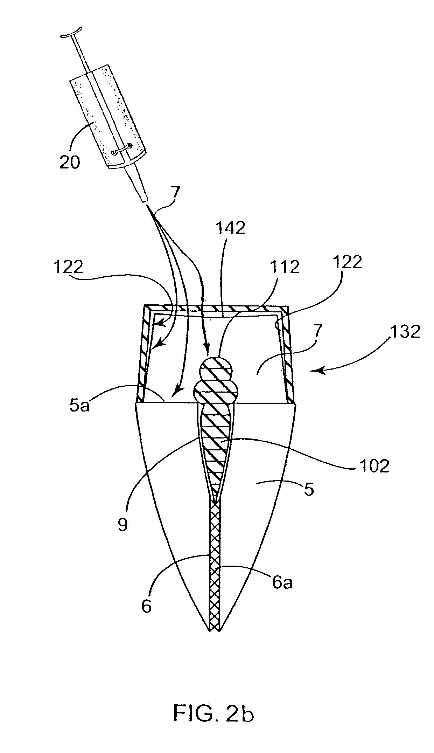

Dans le cas d'une dent délabrée, c'est-à-dire sans couronne, il est par exemple possible de réaliser, comme respectivement illustré par les figures 2a et 2b, une couronne provisoire suivie d'un inlay core par la méthode directe.

En référence à la figure 2a, la couronne provisoire est préparée par formation à la fraise d'un forage 9, réalisé dans la racine 5, pour permettre l'insertion d'un tenon d'ancrage intraradiculaire métallique 101 dans ce forage, après obturation du canal 6 de la racine 5 par de la pâte et de la gutta-percha 6a. Le tenon comporte une tête 111 de rétention de résine.

De la résine 7 est injectée sur la tête de rétention 111 et sur la préparation coronaire formée par la plateforme supérieure 5a de la racine, à l'aide de la seringue 20 selon l'invention. Une injection de résine est également effectuée sur les parois internes 121 d'un moule préformé 131 en matériau plastique à placer sur la plateforme 5a. Après la prise de la résine, ébarbage et pose de ciment provisoire, la couronne provisoire est prête.

Par ailleurs, en référence à la figure 2b, l'inlay core est préparé par la méthode directe à partir de l'introduction dans le forage d'un tenon d'ancrage intraradiculaire 102. Le tenon est constitué en matériau plastique calcinable pour permettre sa duplication.

Ce tenon comporte également une tête 112 de rétention de résine. De la résine 7a été de nouveau injectée sur la tête de rétention 112 et sur la préparation coronaire formée par la plateforme supérieure 5a de la racine, à l'aide de la seringue 20 selon l'invention.

Une injection de résine a été également effectuée sur les parois internes 122 d'un moule de dépouille tronconique 132 à positionner sur la plateforme supérieure 5a. Après taille à la fraise pour former une couronne de base 142, l'inlay core (comportant la couronne taillée et le tenon) est transmis au prothésiste pour duplication en alliage métallique, comme exposé dans l'introduction de la présente description.

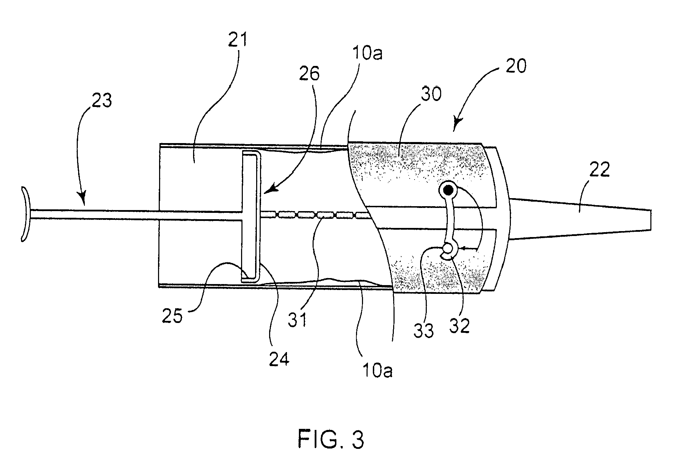

Selon le mode de réalisation illustré en figure 3, un exemple de seringue 20 selon l'invention comporte un corps 21 cylindrique, un embout 22, un piston 23 et une gaine 30 enserrant le corps 21 de la seringue. Le corps et l'embout sonten matériau à base de silicone.

Ce matériau est réalisé par des méthodes classiques de polycondensation ou polyaddition dans des conditions connues de température et de pression, à partir de siloxanes, de catalyseurs et de PTFE. Par exemple, la silicone comporte un carbure siliconé, du dioxyde de titane, du polydiméthylsiloxane et une charge adaptée.

Des fibres de renfort sont avantageusement additionnées en fin de préparation.

La gaine 30 est en matériau plastique rigide, articulée selon une charnière 31 et munie de deux crochets 32 amovibles pour pouvoir retirer cette gaine après la prise de la résine. Alternativement, la gaine peut être en métal ou en verre résistant.

La section droite de cette gaine 30 est inférieure d'environ 3% à celle du corps 21 de la seringue en silicone. Ainsi, le résidu 10a de résine durci à l'intérieur du corps de la seringue en silicone aura un diamètre inférieur à celui du corps de la seringue en silicone. Ainsi, le démoulage de la seringue sera alors plus aisé, combiné à la rétraction de la résine.

Cette gaine 30 aura également pour fonction de maintenir rigide le corps 21 de la seringue 20 en silicone pendant l'injection de la résine sur la préparation prothétique coronaire.

Le piston 23 de la seringue est en métal, de façon à permettre l'injection de par sa rigidité. La face 24 du piston en contact avec la résine et son rebord 25 sont avantageusement recouverts d'une calotte 26 en matériau siliconé, qu'on pourra décapuchonner pour démouler la résine de la seringue.

L'invention n'est pas limitée aux exemples décrits et représentés. II est par exemple possible d'adapter des embouts en matériau plastique rigide sur des corps de seringue en silicone, afin de ne changer que l'embout à chaque utilisation. Cette version concerne des applications où le produit à injecter est particulièrement polluant ou contaminant.

Par ailleurs, les crochets de fermeture de la gaine peuvent être remplacer par tout moyen de verrouillage amovible apte à subir un autoclavage, comme des moyens de clipsage, des têtes d'avancée s'intégrant dans des encoches ou des trous complémentaires disposés radialement ou tangentiellement, ou des anneaux de serrage de type serre-joint.

## Revendications

1. Seringue pour injecter un produit de consistance mastique à durcissement rapide, cette seringue comportant un embout, un corps et un piston, **caractérisée en ce que** l'embout (22) et le corps (21) de la seringue (20) sont entièrement réalisés en matériau souple à base d'au moins un élastomère, de souplesse adaptée pour permettre le démoulage du résidu (10a) de matériau durci dans la seringue après injection.

2. Seringue en matériau souple selon la revendication 1, dans laquelle l'élastomère est un matériau autoclavable choisi parmi un caoutchouc naturel ou synthétique, une silicone, et un mélange d'au moins deux de ces élastomères.

3. Seringue en matériau souple selon la revendication 1 ou 2, **caractérisée en ce que** le piston (23) présente une face de poussée (24) contre le produit (10), prolongée par un rebord périphérique (25), cette face et son rebord étant recouverts d'une calotte amovible (26) en matériau souple constitutif du corps et de l'embout.

4. Seringue en matériau souple selon l'une quelconque des revendications 1 à 3, **caractérisée en ce que** le corps (21) est cylindrique et enserré dans une gaine (30) en matériau rigide d'où émerge l'embout (22) de la seringue (20).

5. Seringue en matériau souple selon la revendication précédente, **caractérisée en ce que** la gaine (30) est articulée et munie de moyens de fermeture amovibles (32) pour maintenir le corps (21) de seringue contre la face interne de la gaine (30) pendant l'opération d'injection de produit (10) et libérer le corps (21) après cette opération afin de démouler le produit durci (10a).

6. Seringue en matériau souple selon la revendication 4 ou 5, **caractérisée en ce que** le diamètre de la gaine (30) est légèrement inférieur au diamètre du corps de seringue (21) pour faciliter le démoulage de la résine (10) par augmentation du diamètre du corps de la seringue hors de la gaine.

7. Seringue selon l'une quelconque des revendications précédentes, **caractérisée en ce que** le produit mastique est une résine de préparation prothétique coronaire.

8. Seringue en matériau souple selon l'une quelconque des revendications 2 à 7, **caractérisée en ce que** le matériau à base de silicone est mélangé à un polymère poreux choisi parmi du polytétrafluoroethylène, du polyuréthane, un élastomère, et un mélange de deux de ces polymères.

9. Seringue en matériau souple selon la revendication précédente, **caractérisée en ce que** le matériau constitutif est drapé de fibres de renfort.
